Europäisches Patentamt

European Patent Office

Office européen des brevets

(11) Numéro de publication : **0 459 845 A1**

# (12) DEMANDE DE BREVET EUROPEEN

(21) Numéro de dépôt : **91401114.3**

(22) Date de dépôt : **26.04.91**

(51) Int. Cl.⁵ : **A47H 27/00, A47G 7/04, F16B 2/12**

(30) Priorité : **28.05.90 FR 9006576**

(43) Date de publication de la demande :
**04.12.91 Bulletin 91/49**

(84) Etats contractants désignés :
**BE DE ES GB IT NL**

(71) Demandeur : **BOUILLARD FRERES S.A.,
Société anonyme dite:
F-71370 Saint-Germain du Plain (FR)**

(72) Inventeur : **Bouillard, Jean-Jacques
Le Grand Saint-Germain
F-71370 Saint-Germain du Plain (FR)**

(74) Mandataire : **Jolly, Jean-Pierre et al
Cabinet Jolly 54, rue de Clichy
F-75009 Paris (FR)**

(54) **Support de jardinière.**

(57)     L'invention concerne un support de jardinière.
    Ce support, de type muni d'une patte de retenue arrière (9) montée réglable en longueur par coulissement de son corps sur un bras (7) du support et fixation en position, est caractérisé en ce que la partie du support ou bras (7) coopérant avec ladite patte est munie d'un jeu de glissières (13) dans lequel s'engagent les ailes correspondantes (15) du corps de la patte, ces dernières étant pourvues d'un profil cranté sur lequel peut s'engager en prise un élément de pion (19) monté solidaire du bras du support, cet élément de pion étant mobile en une position permettant le libre coulissement de la patte sur son support et une position verrouillée de service la bloquant en position à une longueur désirée sur son support.

EP 0 459 845 A1

Fig.1

La présente invention concerne un support de jardinière et en particulier un système de verrouillage de la patte supérieure arrière assurant la retenue du support en suspension sur la paroi ou balustrade support.

On connaît déjà par le brevet n° 2 340 073 au nom de la Demanderesse un support de balconnière dont la patte de retenue arrière est montée coulissante et réglable en longueur, étant fixée à la longueur désirée par serrage d'une vis sur une lumière oblongue formée dans le corps de la patte.

L'invention vise à perfectionner cette liaison coulissante de la patte de retenue arrière en évitant d'avoir à serrer ou desserrer une vis de fixation.

Il est en effet proposé selon l'invention un support de jardinière de type muni d'une patte de retenue arrière montée réglable en longueur par coulissement de son corps sur un bras du support et fixation en position, caractérisé en ce que la partie du support ou bras coopérant avec ladite patte est munie d'un jeu de glissières dans lequel s'engagent les ailes correspondantes du corps de la patte, ces dernières étant pourvues d'un profil cranté sur lequel peut s'engager en prise un élément de pion monté solidaire du bras du support, cet élément de pion étant mobile en une position permettant le libre coulissement de la patte sur son support et une position verrouillée de service la bloquant en position à une longueur désirée sur son support.

Selon des caractéristiques avantageuses de l'invention, lesdites glissières du support ont un profil longitudinal régulier de section en forme de C, sont tournées vers l'extérieur et disposées opposées l'une à l'autre avec symétrie par rapport à un plan vertical médian du support et lesdites ailes de la patte ont un profil régulier correspondant dont le crantage est similaire à celui d'une crémaillère, ces ailes crantées à profil de crémaillère, tournées l'une vers l'autre, étant reçues dans les glissières du bras-support.

L'élément pion est un clips cranté extérieurement, de profil complémentaire de celui des ailes de la patte, ce clips étant monté mobile verticalement dans un logement adéquat du bras du support, de manière que en position haute il ne fasse pas prise avec les ailes de la patte et permette le libre coulissement de la patte et qu'en position basse, en appui sur le fond de son logement et retenu par l'engagement de crantage, il verrouille ladite patte solidairement au corps du support.

Toutes ces caractéristiques et d'autres du support selon l'invention sont illustrées ci-après à l'aide d'un exemple de réalisation et en référence au dessin annexé sur lequel :
   – La figure 1 est une vue en élévation du support selon l'invention, la patte de retenue arrière étant détachée du bras du support,
   – la figure 2 est une vue analogue à celle de la figure 1 montrant la patte en service, et
   – la figure 3 est une vue de dessus de la patte de retenue.

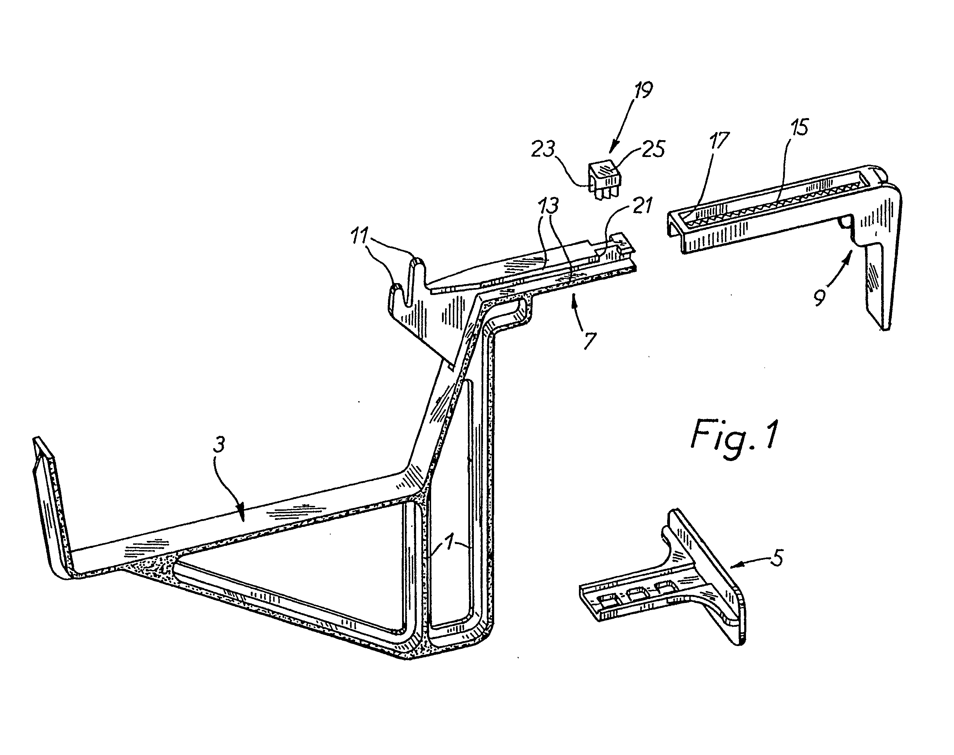

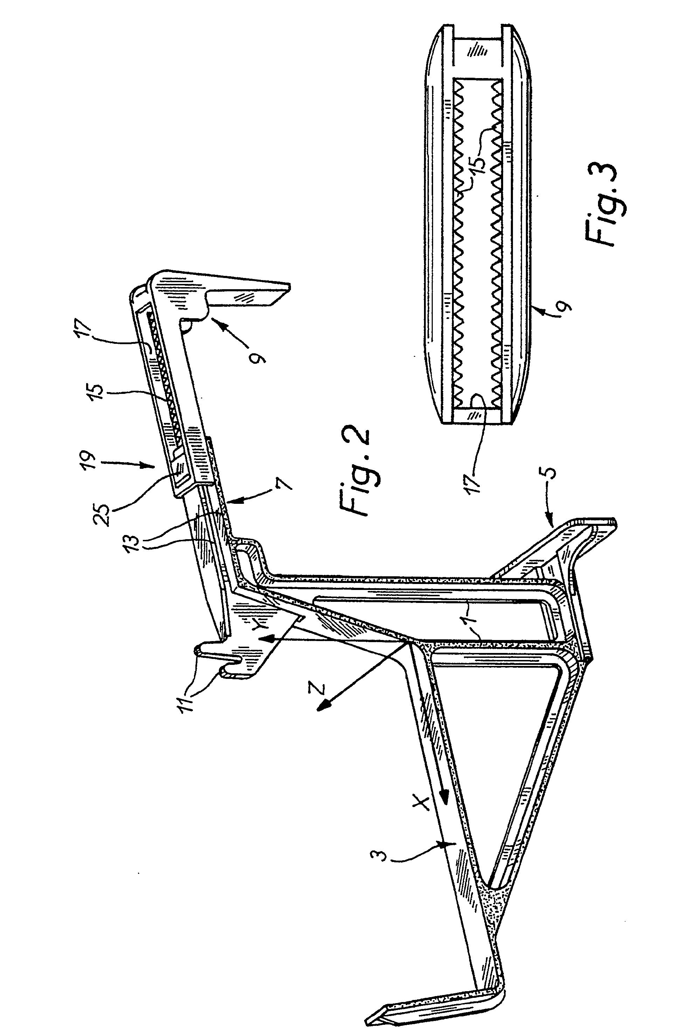

Comme représenté sur les figures 1 et 2, le support de jardinière selon l'invention comporte des éléments montants verticaux solidaires 1 auxquels sont reliées respectivement à l'avant une console 3 support de jardinière et à l'arrière, un taquet d'appui inférieur 5. En partie haute arrière, il comprend un bras horizontal 7 support de la patte de retenue 9, laquelle s'adapte à la paroi ou balustrade support par sa partie coudée verticale. Ledit bras est muni à l'avant de pieds de centrage 11 s'engageant sous le rebord périphérique des jardinières et permettant leur mise à position correcte en fonction de leur dimension sur la console. Sur sa partie centrale et arrière, il comporte des éléments de glissière 13 externes longitudinaux opposés dont la section est en forme de C, avec symétrie par rapport à un plan longitudinal vertical médian. La patte de retenue arrière comporte des ailes 15 longitudinales internes de profil cranté à forme de crémaillère (figure 3) aptes à pénétrer dans lesdites glissières. Elle s'engage en coulissement par son extrémité avant sur le bras du support, sa partie évidée supérieure découpée rectangulairement 17 glissant sur la surface supérieure plane du bras.

Le verrouillage du coulissement de la patte sur son bras support est assuré par un élément de clips 19 mobile verticalement dans un logement 21 formé à la partie d'extrémité du bras, et s'adaptant en prise sur le crantage de crémaillère par sa partie inférieure, solidarisant ainsi la patte de son bras support. Ledit élément de clips est en fait un bloc essentiellement parallélépipédique fendu à sa partie inférieure centrale 23, s'engageant en coulissement sur la tranche verticale du profilé de bras 7 et dans l'encadrement de découpe supérieur de son logement 21 formé sur la glissière supérieure 13. Son crantage inférieur reproduit longitudinalement plusieurs crans (2 à 3) de crémaillère de façon complémentaire de ceux de la patte. Lorsqu'il est enfoncé dans son logement (manuellement par pression du doigt), ses crans viennent s'engager dans ceux de la patte, solidarisant cette dernière au bras support. On notera que le coincement sur crantage le verrouille en position enfoncée dans son logement, le protégeant de toute remontée intempestive qui naturellement libérerait la patte. Dans ce même but de protection du verrouillage, la tête de forme carrée 25 du clips rentre complètement dans la découpe 17 de la patte, empêchant sa prise intempestive. Pour le soulever, il faut agir avec un outil, tourne-vis par exemple, et faire levier vers le haut pour le dégager, libérant ainsi la patte. La patte peut être mise à la longueur voulue dans les limites de sa course permise en fonction de divers éléments, tels que la largeur de la main courante de la balustrade ou la recherche de la verticalité. Naturellement, il s'agira de maintenir simultanément le taquet d'appui inférieur sur la paroi support. Le coulissement est permis sensiblement sur la longueur de crantage des ailes moins la largeur du clips, et donc sur une grande longueur de la partie horizontale de la patte.

Ce qui précède montre la simplicité du mécanisme de verrouillage de la patte de retenue du support de jardinière selon l'invention.

L'invention n'est pas limitée à l'exemple représenté mais comprend toutes les variantes de réalisation qui peuvent être imaginées dans le cadre des revendications ci-après.

**Revendications**

1. Support de jardinière de type muni d'une patte de retenue arrière (9) montée réglable en longueur par coulissement de son corps sur un bras (7) du support et fixation en position, caractérisé en ce que la partie du support ou bras (7) coopérant avec ladite patte est munie d'un jeu de glissières (13) dans lequel s'engagent les ailes correspondantes (15) du corps de la patte, ces dernières étant pourvues d'un profil cranté sur lequel peut s'engager en prise un élément de pion (19) monté solidaire du bras du support, cet élément de pion étant mobile en une position permettant le libre coulissement de la patte sur son support et une position verrouillée de service la bloquant en position à une longueur désirée sur son support.

2. Support de jardinière selon la revendication 1, caractérisé en ce que lesdites glissières (13) du support ont un profil longitudinal régulier de section en forme de C, sont tournées vers l'extérieur et disposées opposées l'une à l'autre avec symétrie par rapport à un plan vertical médian du support, et lesdites ailes (15) de la patte ont un profil régulier correspondant dont le crantage est similaire à celui d'une crémaillère, ces ailes crantées à profil de crémaillère, tournées l'une vers l'autre, étant reçues dans les glissières (13) du bras-support (7).

3. Support de jardinière selon l'une des revendications 1 et 2, caractérisé en ce ledit élément pion (19) est un clips cranté extérieurement le profil complémentaire de celui des ailes (15) de la patte, ce clips étant monté mobile verticalement dans un logement adéquat (21) du bras du support, de manière que en position haute il ne fasse pas prise avec les ailes de la patte et permette le libre coulissement de la patte et qu'en position basse, en appui sur le fond de son logement et retenu par l'engagement de crantage, il verrouille ladite patte solidairement au corps du support.

4. Support de jardinière selon l'une des revendications précédentes, caractérisé en ce que la course de coulissement de la patte de retenue (9) est égale sensiblement à la longueur de crantage de ses ailes (15) moins la largeur du clips (19).

5. Support de jardinière selon l'une des revendications précédentes, caractérisé en ce que ledit clips (19) est un bloc essentiellement parallélépipédique fendu à sa partie inférieure centrale (23), s'engageant en coulissement sur la tranche verticale du profilé de bras (7) et dans l'encadrement de découpe supérieur de son logement (21) formé sur la glissière supérieure (13) et son crantage inférieur reproduit longitudinalement plusieurs crans (2 à 3) de crémaillère de façon complémentaire de ceux de la patte.

6. Support de jardinière selon l'une les revendications précédentes, caractérisé en ce que ledit clips (19) a une tête de forme carrée rentrant dans la découpe supérieure (17) de la patte.

7. Support de jardinière selon l'une des revendications précédentes, caractérisé en ce que ledit clips (19) est enfoncé manuellement et dégagé à l'aide d'un outil, tourne-vis par exemple.

*Fig.1*

EP 0 459 845 A1

*Fig.2*

*Fig.3*

Office européen
des brevets

# RAPPORT DE RECHERCHE EUROPEENNE

Numéro de la demande

EP    91 40 1114

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|-----------|------------------------------------------------------------------------------------|-------------------------|-----------------------------------------|
| A | DE-A-3 506 407 (ALFER  ALUMINIUM FERTIGBAU GMBH) * page 11, ligne 7 - page 12, ligne 9; figures 1-4 * --- | 1 | A47H27/00 A47G7/04 F16B2/12 |
| A | GB-A-2 150 207 (PLASTI MAX SRL) * page 1, ligne 64 - ligne 106; figures 1-5 * --- | 1 | |
| A | FR-A-2 510 349 (FAMY MARCEL) * page 2, ligne 5 - ligne 25; figures 1,4 * ----- | 1 | |

| | DOMAINES TECHNIQUES RECHERCHES (Int. Cl.5 ) |
|---|-----------------------------------------------|
| | A47H A47G F16B E06B |

Le présent rapport a été établi pour toutes les revendications

| Lieu de la recherche | Date d'achèvement de la recherche | Examinateur |
|----------------------|-----------------------------------|-------------|
| LA HAYE | 13 AOUT 1991 | BARBAS A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)